# FASCICULE DE BREVET EUROPEEN

(11) **EP 2 329 987 B1**
(45) Date de publication et mention de la délivrance du brevet: **02.10.2013**
(21) Numéro de dépôt: 10290631.0
(22) Date de dépôt: 30.11.2010
(51) Int. Cl.: B60N 2/48

(54) **Appui-tête de siège de véhicule automobile et son procédé de réalisation**
Kopfstütze für einen Kraftfahrzeugsitz und Herstellungsverfahren
Head-rest for a vehicle seat and its corresponding manufacturing method

(30) Priorité: 02.12.2009 FR 0905842
(43) Date de publication de la demande: 08.06.2011
(73) Titulaire: Centre d'étude et de recherche pour l'automobile (CERA), 51100 Reims (FR)
(72) Inventeur: Bieven, Franck, 72002 Paris (FR); Gustin, José, 08310 Machault (FR); Bonfils, Xavier, 51100 Reims (FR)
(74) Mandataire: Sayettat, Julien Christian

(56) Documents cités:
- EP-A1- 1 580 067
- JP-A- 2006 224 921
- JP-A- 2007 083 918

## Description

L'invention concerne un procédé de réalisation d'un appui-tête de siège de véhicule automobile, un appui-tête obtenu par un tel procédé et un siège comprenant un tel appui-tête.

Il est connu de réaliser un appui-tête de siège de véhicule automobile, ledit appui-tête comprenant :
- une armature comprenant un élément fixe et un élément mobile articulé en haut dudit élément fixe selon un axe transversal,
- un coussin fixe recouvrant ledit élément fixe, afin de former une partie fixe, ledit coussin présentant une face avant d'appui de l'arrière de la tête,
- un coussin mobile recouvrant ledit élément mobile, afin de former une partie mobile,
   lesdits coussins étant agencés de sorte que ledit coussin mobile soit mobile en rotation entre :
- une position escamotée où il recouvre au moins une portion des faces latérales dudit coussin fixe, la face avant dudit coussin mobile étant dans le prolongement de ladite face avant d'appui,
- et une position déployée où ledit coussin mobile est saillant vers l'avant pour former appui cervical et appui latéral de la tête.

L'état de la technique le plus proche est illustré par le document JP 2006-224921-A.

Un procédé connu de réalisation de l'appui-tête comprend notamment les étapes suivantes :
- prévoir pour chaque coussin une coiffe de revêtement,
- introduire au moins en partie l'élément d'armature correspondant dans chaque coiffe,
- disposer chaque coiffe pourvue de l'élément correspondant dans un moule respectif de géométrie correspondant à celle de ladite coiffe,
- injecter un mélange précurseur de mousse flexible dans chaque coiffe,
- après expansion de la mousse dans les coiffes, démouler les coussins obtenus,
- assembler les éléments entre eux pour obtenir l'appui-tête attendu.

Une telle réalisation présente l'avantage de disposer de coussins dans lesquels la mousse surmoule la coiffe et l'élément d'armature correspondant, ce qui permet aux coussins de présenter une très bonne cohésion entre leurs composants.

En revanche, un tel appui-tête est de réalisation complexe puisqu'il faut prévoir deux coussins distincts qui sont ensuite associés entre eux.

L'invention a pour but de pallier cet inconvénient en proposant un procédé de réalisation simplifié d'un tel appui-tête.

A cet effet, et selon un premier aspect, l'invention propose un procédé de réalisation d'un appui-tête de siège de véhicule automobile, ledit procédé comprenant les étapes suivantes :
- prévoir une coiffe de revêtement comprenant une housse se prolongeant par une excroissance tubulaire en U, ladite excroissance s'étendant en bordures latérales et inférieure de la face avant de ladite housse, ladite excroissance se rattachant aux coins supérieurs de ladite face avant par les extrémités du U, le volume intérieur de ladite excroissance communiquant avec celui de ladite housse par lesdites extrémités,
- prévoir une armature comprenant un élément fixe et un élément mobile articulé en haut dudit élément fixe selon un axe transversal, ledit élément fixe étant agencé pour pouvoir être introduit dans ladite housse et ledit élément mobile étant agencé pour pouvoir être introduit dans ladite excroissance, ledit élément mobile comprenant une ouverture de chaussage,
- introduire ladite armature dans ladite coiffe en logeant au moins une partie dudit élément fixe dans ladite housse et au moins une partie dudit élément mobile dans ladite excroissance,
- disposer l'ensemble dans un moule de géométrie correspondant à celle de ladite coiffe,
- injecter un mélange précurseur de mousse flexible dans ladite coiffe,
- après expansion de la mousse dans ladite housse et dans ladite excroissance, démouler l'appui-tête.

Dans cette description, les termes de positionnement dans l'espace (avant, arrière, longitudinal, vertical, horizontal, latéral, inférieur, supérieur, transversal,...) sont pris en référence à l'appui-tête disposé dans le véhicule.

L'agencement proposé permet une simplification notable de la réalisation de l'appui-tête puisque les parties fixe et mobile de l'appui-tête, décrites par la suite, sont réalisées d'un seul tenant pour la coiffe et le matériau de rembourrage, d'où l'utilisation d'un moule unique et d'une seule coiffe, la mobilité de la partie mobile étant rendue possible du fait de la souplesse de la mousse.

Selon d'autres aspects, l'invention propose un appui-tête obtenu par un tel procédé et un siège comprenant un tel appui-tête.

D'autres particularités et avantages de l'invention apparaîtront dans la description qui suit, faite en référence aux figures jointes dans lesquelles :

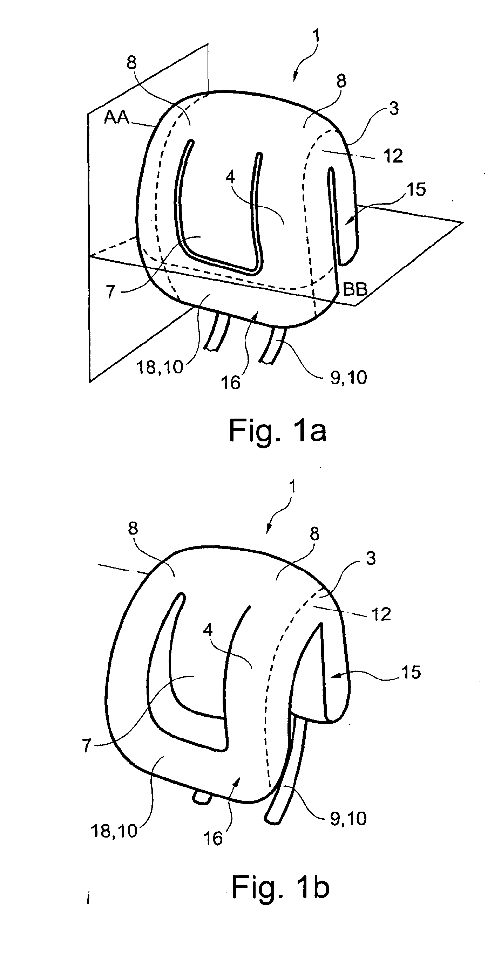

- la figure 1 est une vue en perspective d'un appui-tête selon une réalisation, la partie mobile étant en position rabattue (figure 1 a) et en position déployée (figure 1 b),

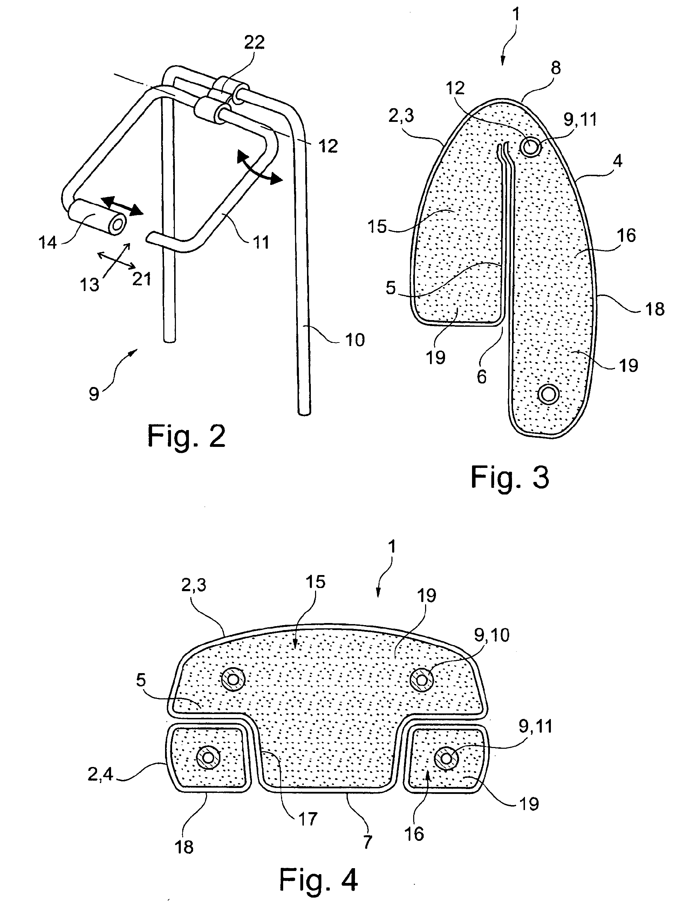

- la figure 2 est une vue en perspective de l'armature de l'appui-tête de la figure 1 selon une réalisation, l'élément mobile étant déployé vers l'avant, ladite armature étant pourvue d'un élément de raccord mis en position dans laquelle l'ouverture de chaussage est non refermée,
- la figure 3 est une vue en coupe selon un plan AA longitudinal vertical de l'appui-tête de la figure 1 a,
- la figure 4 est une vue en coupe selon un plan BB horizontal de l'appui-tête de la figure 1a.

En référence aux figures, on décrit un procédé de réalisation d'un appui-tête 1 de siège de véhicule automobile, ledit procédé comprenant les étapes suivantes:
- prévoir une coiffe 2 de revêtement comprenant une housse 3 se prolongeant par une excroissance 4 tubulaire en U, ladite excroissance s'étendant en bordures latérales 5 et inférieure 6 de la face avant 7 de ladite housse, ladite excroissance se rattachant aux coins supérieurs 8 de ladite face avant par les extrémités du U, le volume intérieur de ladite excroissance communiquant avec celui de ladite housse par lesdites extrémités,
- prévoir une armature 9 comprenant un élément fixe 10 et un élément mobile 11 articulé en haut dudit élément fixe selon un axe transversal 12, ledit élément fixe étant agencé pour pouvoir être introduit dans ladite housse et ledit élément mobile étant agencé pour pouvoir être introduit dans ladite excroissance, ledit élément mobile comprenant une ouverture 13 de chaussage, une telle ouverture étant nécessaire pour permettre d'introduire l'élément mobile 11 dans l'excroissance 4,
- introduire ladite armature dans ladite coiffe en logeant au moins une partie dudit élément fixe dans ladite housse et au moins une partie dudit élément mobile dans ladite excroissance,
- disposer l'ensemble dans un moule de géométrie correspondant à celle de ladite coiffe,
- injecter un mélange précurseur de mousse flexible dans ladite coiffe,
- après expansion de la mousse dans ladite housse et dans ladite excroissance, démouler l'appui-tête 1 obtenu.

Selon une réalisation, le procédé comprend en outre, les étapes suivantes :
- avant introduction de l'armature 9 - ou simultanément à cette introduction - dans la coiffe 2, introduire dans l'excroissance 4 un élément de raccord 14 agencé pour refermer l'ouverture 13 de chaussage,
- après introduction de ladite armature dans ladite coiffe et avant injection du mélange précurseur de mousse, refermer ladite ouverture avec ledit élément de raccord.

On décrit à présent un appui-tête 1 réalisé par un tel procédé, ledit appui-tête comprenant :
- une coiffe 2 de revêtement comprenant une housse 3 se prolongeant par une excroissance 4 tubulaire en U, ladite excroissance s'étendant en bordures latérales 5 et inférieure 6 de la face avant 7 de ladite housse, ladite excroissance se rattachant aux coins supérieurs 8 de ladite face avant par les extrémités du U, le volume intérieur de ladite excroissance communiquant avec celui de ladite housse par lesdites extrémités, • une armature 9 comprenant un élément fixe 10 et un élément mobile 11 articulé en haut dudit élément fixe selon un axe transversal 12, ledit élément fixe étant introduit au moins en partie dans ladite housse et ledit élément mobile étant introduit au moins en partie dans ladite excroissance, ledit élément mobile comprenant une ouverture 13 de chaussage,
   ladite coiffe étant remplie par un matériau de rembourrage 19 à base de mousse flexible, ladite mousse surmoulant ladite coiffe et au moins en partie lesdits éléments fixe et mobile de sorte que ledit appui-tête présente une partie fixe 15, ladite partie fixe présentant une face avant 7 d'appui de l'arrière de la tête, et une partie mobile 16 en rotation entre une position rabattue vers ladite partie fixe et une position déployée vers l'avant, lesdites parties étant agencés de sorte que :
- en position rabattue, ladite partie mobile recouvre au moins une portion des faces latérales 17 de ladite partie fixe, la face avant 18 de ladite partie mobile étant dans le prolongement de ladite face avant d'appui,
- en position déployée, ladite partie mobile est saillante vers l'avant pour former appui cervical et appui latéral de la tête.

Selon la réalisation représentée, l'élément mobile 11 se présente sous une forme générale de U renversé - notamment à base de tube métallique replié - dont les extrémités sont repliées à angle droit vers l'intérieur afin de pénétrer dans la partie horizontale 20 de l'excroissance 4, l'ouverture 13 étant définie par l'écart 21 entre les extrémités du U renversé.

L'élément fixe 10 se présente sous une forme générale de U - notamment à base de tube métallique replié - dont les extrémités sont saillantes de la housse 3 afin de pouvoir être montées sur un dossier de siège automobile.

L'élément mobile 11 est monté sur l'élément fixe 10 au moyen d'une pince 22 exerçant un effort de friction permettant de maintenir une position angulaire donnée entre lesdits éléments.

Selon la réalisation représentée, l'appui-tête 1 comprend en outre un élément de raccord 14 refermant l'ouverture 13 de chaussage, ce qui permet un appui cervical optimal du passager.

Selon la réalisation représentée, l'élément de raccord 14 est sous forme d'un tube coulissant sur les extrémités de l'élément mobile 11, la fermeture de l'ouverture 13 étant réalisée manuellement au travers de l'excroissance par coulissement dudit tube.

Selon une réalisation non représentée, l'élément mobile 11 est en forme de U retourné et l'élément de raccord 14 en forme de U, les extrémités respectives desdits éléments s'emboîtant les unes dans les autres.

On décrit à présent, de façon non représentée, un siège de véhicule automobile comprenant un appui-tête 1 dont l'élément fixe 10 est intégré à l'armature du dossier dudit siège.

## Revendications

1. Procédé de réalisation d'un appui-tête (1) de siège de véhicule automobile, ledit procédé comprenant les étapes suivantes :
• prévoir une coiffe (2) de revêtement comprenant une housse (3) se prolongeant par une excroissance (4) tubulaire en U, ladite excroissance s'étendant en bordures latérales (5) et inférieure (6) de la face avant (7) de ladite housse, ladite excroissance se rattachant aux coins supérieurs (8) de ladite face avant par les extrémités du U, le volume intérieur de ladite excroissance communiquant avec celui de ladite housse par lesdites extrémités,
• prévoir une armature (9) comprenant un élément fixe (10) et un élément mobile (11) articulé en haut dudit élément fixe selon un axe transversal (12), ledit élément fixe étant agencé pour pouvoir être introduit dans ladite housse et ledit élément mobile étant agencé pour pouvoir être introduit dans ladite excroissance, ledit élément mobile comprenant une ouverture (13) de chaussage,
• introduire ladite armature dans ladite coiffe en logeant au moins une partie dudit élément fixe dans ladite housse et au moins une partie dudit élément mobile dans ladite excroissance,
• disposer l'ensemble dans un moule de géométrie correspondant à celle de ladite coiffe,
• injecter un mélange précurseur de mousse flexible dans ladite coiffe,
• après expansion de la mousse dans ladite housse et dans ladite excroissance, démouler l'appui-tête (1).

2. Procédé selon la revendication 1, **caractérisé en ce qu'**il comprend en outre, les étapes suivantes :
• avant introduction de l'armature (9) - ou simultanément à cette introduction - dans la coiffe (2), introduire dans l'excroissance (4) un élément de raccord (14) agencé pour refermer l'ouverture (13) de chaussage,
• après introduction de ladite armature dans ladite coiffe et avant injection du mélange précurseur de mousse, refermer ladite ouverture avec ledit élément de raccord.

3. Appui-tête réalisé par un procédé selon l'une quelconque des revendications 1 ou 2, ledit appui-tête comprenant :
• une coiffe (2) de revêtement comprenant une housse (3) se prolongeant par une excroissance (4) tubulaire en U, ladite excroissance s'étendant en bordures latérales (5) et inférieure (6) de la face avant (7) de ladite housse, ladite excroissance se rattachant aux coins supérieurs (8) de ladite face avant par les extrémités du U, le volume intérieur de ladite excroissance communiquant avec celui de ladite housse par lesdites extrémités,
• une armature (9) comprenant un élément fixe (10) et un élément mobile (11) articulé en haut dudit élément fixe selon un axe transversal (12), ledit élément fixe étant introduit au moins en partie dans ladite housse et ledit élément mobile étant introduit au moins en partie dans ladite excroissance, ledit élément mobile comprenant une ouverture (13) de chaussage,
ladite coiffe étant remplie par un matériau de rembourrage (19) à base de mousse flexible, ladite mousse surmoulant ladite coiffe et au moins en partie lesdits éléments fixe et mobile de sorte que ledit appui-tête présente une partie fixe (15), ladite partie fixe présentant une face avant (7) d'appui de l'arrière de la tête, et une partie mobile (16) en rotation entre une position rabattue vers ladite partie fixe et une position déployée vers l'avant, lesdites parties étant agencés de sorte que :
• en position rabattue, ladite partie mobile recouvre au moins une portion des faces latérales (17) de ladite partie fixe, la face avant (18) de ladite partie mobile étant dans le prolongement de ladite face avant d'appui,
• en position déployée, ladite partie mobile est saillante vers l'avant pour former appui cervical et appui latéral de la tête.

4. Appui-tête selon la revendication 3, **caractérisé en ce qu'**il comprend en outre un élément de raccord (14) refermant l'ouverture (13) de chaussage.

5. Siège de véhicule automobile comprenant un appui-tête selon l'une quelconque des revendications 3 ou 4, l'élément fixe (10) étant intégré à l'armature du dossier dudit siège.

## Patentansprüche

1. Verfahren zum Herstellen einer Kopfstütze (1) für einen Kraftfahrzeugsitz, wobei das Verfahren die folgenden Schritte umfasst:
- Bereitstellen einer Überzugskappe (2), die eine Hülle (3) umfasst, die sich um eine U-förmige röhrenförmige Ausstülpung (4) verlängert, wobei sich die Ausstülpung an den seitlichen (5) und unteren (6) Umrandungen der vorderen Seite (7) der Hülle erstreckt, wobei die Ausstülpung an den oberen Ecken (8) der vorderen Seite an den Enden des Us befestigt ist, wobei das Innenvolumen der Ausstülpung mit dem der Hülle an den Enden in Verbindung steht,
- Bereitstellen einer Armierung (9), die ein festes Element (10) und ein bewegliches (11) Element, das oben an dem festen Element entlang einer Querachse (12) angelenkt ist, umfasst, wobei das feste Element angeordnet ist, um in die Hülle eingeführt werden zu können, und das bewegliche Element angeordnet ist, um in die Ausstülpung eingeführt werden zu können, wobei das bewegliche Element eine Öffnung (13) zum Aufsetzen umfasst,
- Einführen der Armierung in die Kappe, indem mindestens ein Teil des festen Elements in der Hülle und mindestens ein Teil des beweglichen Elements in der Ausstülpung untergebracht wird,
- Anordnen der Einheit in einer Form, deren Geometrie derjenigen der Kappe entspricht,
- Einspritzen einer Vorläufermischung aus Weichschaumstoff in die Kappe,
- nach der Expansion des Schaumstoffs in der Hülle und in der Ausstülpung, Entformen der Kopfstütze (1).

2. Verfahren nach Anspruch 1, **dadurch gekennzeichnet, dass** es ferner folgende Schritte umfasst:
- vor dem Einführen der Armierung (9) - oder gleichzeitig zu dieser Einführung - in die Kappe (2), Einführen in die Ausstülpung (4) eines Anschlusselements (14), das angeordnet ist, um die Öffnung (13) zum Aufsetzen zu verschließen,
- nach dem Einführen der Armierung in die Kappe und vor dem Einspritzen der Vorläufermischung aus Schaumstoff, Verschließen der Öffnung mit dem Anschlusselement.

3. Kopfstütze, die durch ein Verfahren nach einem der Ansprüche 1 oder 2 hergestellt wird, wobei die Kopfstütze Folgendes umfasst:
- eine Überzugskappe (2), die eine Hülle (3) umfasst, die sich um eine U-förmige röhrenförmige Ausstülpung (4) verlängert, wobei sich die Ausstülpung an den seitlichen (5) und unteren (6) Umrandungen der vorderen Seite (7) der Hülle erstreckt, wobei die Ausstülpung an den oberen Ecken (8) der vorderen Seite an den Enden des Us befestigt ist, wobei das Innenvolumen der Ausstülpung mit dem der Hülle an den Enden in Verbindung steht,
- eine Armierung (9), die ein festes Element (10) und ein bewegliches (11) Element, das oben an dem festen Element entlang einer Querachse (12) angelenkt ist, umfasst, wobei das feste Element mindestens teilweise in die Hülle eingeführt wird und das bewegliche Element mindestens teilweise in die Ausstülpung eingeführt wird, wobei das bewegliche Element eine Öffnung (13) zum Aufsetzen umfasst,
wobei die Kappe mit einem Polstermaterial (19) auf Weichschaumstoffbasis gefüllt ist, wobei der Schaumstoff die Kappe und mindestens teilweise die festen und beweglichen Elemente überformt, so dass die Kopfstütze einen festen Teil (15), wobei der feste Teil eine vordere Seite (7) zum Abstützen des hinteren Teils des Kopfes aufweist, und einen beweglichen Teil (16), der zwischen einer Position, die zu dem festen Teil hin eingeklappt ist, und einer nach vorne aufgeklappten Position drehmäßig beweglich ist, aufweist, wobei die Teile derart angeordnet sind, dass:
- in der eingeklappten Position der bewegliche Teil mindestens einen Abschnitt der lateralen Seiten (17) des festen Teils bedeckt, wobei sich die vordere Seite (18) des beweglichen Teils in der Verlängerung der vorderen Stützseite befindet,
- in der ausgeklappten Position der bewegliche Teil nach vorne vorsteht, um eine Nackenstütze und eine seitliche Stütze für den Kopf zu bilden.

4. Kopfstütze nach Anspruch 3, **dadurch gekennzeichnet, dass** sie ferner ein Anschlusselement (14) umfasst, das die Öffnung (13) zum Aufsetzen verschließt.

5. Kraftfahrzeugsitz, umfassend eine Kopfstütze nach einem der Ansprüche 3 oder 4, wobei das feste Element (10) in die Armierung der Rückenlehne des Sitzes integriert ist.

## Claims

1. Method for producing a head-rest (1) for a vehicle seat, said method comprising the following steps:
- providing a cap (2) for covering comprising a cover (3) extended by a U-shaped tubular excrescence (4), said excrescence extending in lateral (5) and lower (6) edges from the front face (7) of said cover, said excrescence being attached to the upper corners (8) of said front face by the ends of the U, with the inside volume of said excrescence communicating with that of said cover via said ends,
- providing a plate (9) comprising a fixed element (10) and a movable element (11) articulated at the top of said fixed element according to a transversal axis (12), said fixed element being arranged to be able to be introduced into said cover and said movable element being arranged to be able to be introduced into said excrescence, said movable element comprising an opening (13) for engagement,
- introducing said plate into said cap by housing at least one portion of said fixed element in said cover and at least one portion of said movable element in said excrescence,
- arranging the assembly in a mould with geometry corresponding to that of said cap,
- injecting a precursor mixture of flexible foam into said cap,
- after expansion of the foam in said cover and in said excrescence, removing the head-rest (1) from the mould.

2. Method according to claim 1, **characterised in that** it further comprises the following steps:
- before introduction of the plate (9) - or simultaneously with this introduction - in the cap (2), introducing in the excrescence (4) a connection element (14) arranged to close the opening (13) for engagement,
- after introduction of said plate in said cap and before injection of the precursor mixture of foam, closing said opening with said connection element.

3. Head-rest produced by a method according to any of claims 1 or 2, said head-rest comprising:
- a cap (2) for covering comprising a cover (3) extended by a U-shaped tubular excrescence (4), said excrescence extending in lateral (5) and lower (6) edges from the front face (7) of said cover, said excrescence being attached to the upper corners (8) of said front face by the ends of the U, with the inside volume of said excrescence communicating with that of said cover via said ends,
- a plate (9) comprising a fixed element (10) and a movable element (11) articulated at the top of said fixed element according to a transversal axis (12), said fixed element being introduced at least partially into said cover and said movable element being introduced at least partially into said excrescence, said movable element comprising an opening (13) for engagement,
said cap being filled with a filler material (19) with a flexible foam base, said foam over-moulding said cap and at least partially said fixed and movable elements in such a way that said head-rest has a fixed portion (15), said fixed portion having a front face (7) for bearing on the rear of the head, and a portion mobile (16) in rotation between a position folded back towards said fixed portion and a deployed position towards the front, said parties being arranged in such a way that:
- in folded position, said mobile portion covers at least one portion of the lateral faces (17) of said fixed portion, with the front face (18) of said mobile portion being in the extension of said front bearing face,
- in deployed position, said mobile portion is protruding towards the front in order to from a cervical support and lateral support of the head.

4. Head-rest according to claim 3, **characterised in that** it further comprises a connection element (14) closing the opening (13) for engagement.

5. Vehicle seat comprising a head-rest according to any of claims 3 or 4, the fixed element (10) being integrated into the plate of the seat back of said seat.
